# EUROPÄISCHE PATENTSCHRIFT

(11) **EP 1 160 007 B1**
(45) Veröffentlichungstag und Bekanntmachung des Hinweises auf die Patenterteilung: **14.07.2010**
(21) Anmeldenummer: 01113253.7
(22) Anmeldetag: 31.05.2001
(51) Int. Cl.: B01J 8/18, B01J 19/24, C04B 20/06

(54) **Verfahren zum Blähen von Vermiculit**
Process for expanding vermiculite
Procédé pour l'expansion de vermiculite

(30) Priorität: 31.05.2000 DE 10026811; 16.06.2000 DE 10029724
(43) Veröffentlichungstag der Anmeldung: 05.12.2001
(73) Patentinhaber: Air Liquide Deutschland GmbH, 40235 Düsseldorf (DE); Messer Group GmbH, 65843 Sulzbach (DE)
(72) Erfinder: Bosch, Joachim, 47647 Kerken (DE)
(74) Vertreter: Kahlhöfer, Hermann

(56) Entgegenhaltungen:
- DE-A- 19 854 390
- US-A- 4 179 264
- US-A- 4 512 736
- US-A- 4 622 007
- US-A- 4 642 047

## Beschreibung

Die vorliegende Erfindung betrifft ein Verfahren zum Blähen von körnigem Roh-Vermiculit mit einem Expansionsrohr und einem oder mehreren an einem Ende des Expansionsrohres angeordneten Brenner, der mindestens eine Brenngasdüse für die Einleitung eines Brenngases und mindestens eine Primärluftdüse für Verbrennungsluft aufweist, im Flugstrom einer Flamme unter Einleitung eines sauerstoffhaltigen Gases in diese Flamme.

Ein Verfahren gemäß dieser Gattung ist aus der US--A-4 512 736 DE-C1 32 29 995 bekannt. In der DE-Schrift wird das Blähen von körnigem Roh- Vermiculit unter Einsatz eines von unten befeuerten Wirbelbettschachts beschrieben. Das Rohkorn wird dabei in die Flamme zudosiert und zirkuliert in der Wirbelschicht, in der es zunächst erwärmt, geschmolzen und durch das verdampfende Hydratwasser aufgebläht wird . Anschließend wird es nach oben ausgetragen. Als Brennstoff für den Schachtofen werden Brenngase, wie zum Beispiel Erdgas, Propan und Butan, sowie Heizöl verwendet und mit Luft als Oxidationsmittel verbrannt.

Als Apparat zur Herstellung von Vermiculit hat sich heute der Schachtofen gegenüber dem horizontal rotierenden Drehrohr weitgehend durchgesetzt. Der Schachtofen besteht aus einem vertikalen Expansionsrohr aus hitzebeständigen Stahl, das von unten durch eine Flamme beheizt wird. Wärmeverluste durch Wärmestrahlung werden durch eine feuerfeste Isolierung, die im Abstand um das Expansionsrohr angebracht ist, minimiert. Die maximal zulässige Betriebstemperatur der Expansionsrohre ist werkstoffabhängig. Als Werkstoff wird in der Regel ein hitzebeständiger Stahl verwendet.

Die Temperatur im Ofen beträgt typisch zwischen 850°C und 950°C. Im Betrieb werden zur Erhöhung der Standzeit niedrige Wandtemperaturen angestrebt, da bereits ab 900°C verstärkt Verzunderung auftritt.

Das Aufblähen der Roh-Vermiculitpartikel wird im wesentlichen durch die Lage und die räumliche Ausdehnung der heißen Flammzone sowie deren Temperatur beeinflusst. Die Temperatur kann durch die Düsengeometrie des Brenners, dem Brennstoff/Luft-Verhältnis und durch den Ofendruck, das heißt die Zufuhr von Falschluft, nur in bestimmten Grenzen beeinflusst werden, ohne dass die zulässigen Betriebstemperaturen überschritten werden. Der inerte Stickstoffanteil in der Verbrennungsluft und der Luftüberschuss in der Flamme begrenzen außerdem die Temperatur in der Verbrennungszone und damit den Wärmeübergang auf die Roh-Vermiculitpartikel. Dadurch ist bei vorhandenem Querschnitt des Expansionsrohres der Durchsatz an expandiertem Vermiculitgranulat mit definiertem Schüttgewicht begrenzt.

Es besteht deshalb ein prinzipielles Interesse an einer Produktivitätsverbesserung, das heißt an einer Durchsatzsteigerung für expandiertes Vermiculit. Ferner sollte der Energieverbrauch reduziert werden.

Aufgabe der Erfindung ist es, ein Verfahren zur Blähung von Roh-Vermiculit zur Verfügung zu stellen, die es erlauben, den Durchsatz von Roh-Vermiculit zu erhöhen und den spezifischen Energiebedarf zu senken.

Diese Aufgabe wird ausgehend von dem eingangs genannten Verfahren erfindungsgemäß dadurch gelöst, dass die Primärluftdüse die Brenngasdüse konzentrisch umgibt, oder dass mehrere Brenngasdüsen innerhalb der mindestens einen Primärluftdüse angeordnet sind, wobei der Brenner weiterhin mindestens eine Unterschalldüse für Sauerstoff oder sauerstoffangereicherte Luft aufweist.

Bei der im Verfahren verwendeten Vorrichtung zur Herstellung von geblähtem Vermiculit mit einem Expansionsrohres ist das Expansionsrohr vorzugsweise in etwa senkrecht, dass bedeutet die Längsachse des Expansionsrohres verläuft genau senkrecht oder mit relativ geringen Abweichungen, beispielsweise einige Grad aus der senkrechten Lage. Der Brenner ist dann vorzugsweise am unteren Ende des senkrechten Expansionsrohres angeordnet.

Bei der im Verfahren verwendeten Vorrichtung wird der Roh-Vermiculit im Flugstrom einer Flamme unter Einleitung von Sauerstoff oder sauerstoffangereicherter Luft durch eine Unterschalldüse in diese Flamme expandiert. Diese Vorrichtung wird hier als "Flugstromreaktor" bezeichnet.

Durch Anreicherung der Verbrennungsluft mit Sauerstoff wird die Temperatur in der Reaktionszone angehoben und damit der Wärmeübergang auf die Roh-Vermiculitpartikel verbessert. Das bedeutet, der Durchsatz von Roh-Vermiculit kann so erhöht werden. Vorteile hinsichtlich der Einleitung des Sauerstoff oder der sauerstoffangereicherten Luft mittels einer Unterschalldüse werden weiter unten anhand des Verfahrens noch näher erläutert.

Die oben genannte Aufgabe ausgehend von dem eingangs beschriebenen Verfahren wird weiterhin erfindungsgemäß dadurch gelöst, dass als sauerstoffhaltiges Gas Sauerstoff oder sauerstoffangereicherte Luft eingesetzt wird, wobei der Sauerstoff oder die sauerstoffangereicherte Luft durch mindestens eine Unterschalldüse axial in die Flamme eingeleitet werden.

Weitere Ausgestaltungen des erfindungsgemäßen Verfahrens sind in den Unteransprüchen angegeben.

Die im Verfahren verwendete Vorrichtung besteht aus einem Brenner, der vorzugsweise am unteren Ende des vertikalen Expansionsrohres angeflanscht ist, wobei vorzugsweise das Brenngas und die Primärluft durch eine zentrische Einzeldüse mit konzentrischer Ringspalt-Primärluftdüse oder durch konzentrische Einzeldüsen innerhalb der Primärluftdüse in das Expansionsrohr eingeblasen wird. Das Brenngas kann sowohl parallel als auch transversal in den Primärluftstrom eingeblasen werden. Das Brenngas und die Primärluft können sowohl außenmischend als auch vorgemischt aus den Brennerdüsen austreten. Durch die Sekundärluftdüse, die bevorzugt konzentrisch um die Primärluftdüse angeordnet ist, kann mit einem separaten Gebläse Luft eingeblasen werden. Es ist aber ebenso möglich, dass sekundäre Luft bzw. Falschluft nur aufgrund eines Unterdrucks im Expansionsrohr angesaugt wird.

Der Sauerstoff wird durch eine Unterschalldüse, die vorzugsweise zentrisch im Brenner angeordnet ist, axial in die Primärluftflamme eingeblasen. Die Düsenaustrittsgeschwindigkeit beträgt vorzugsweise zwischen 5 m/sec. bis 100 m/sec. Es kann vorteilhaft reiner Sauerstoff oder sauerstoffangereicherte Luft mit einem Sauerstoffanteil von vorzugsweise mindestens 50 Vol.-% eingeblasen werden.

Höhere Sauerstoffaustrittsgeschwindigkeiten von 100 m/sec. bewirken aufgrund der hohen Mischungsenergie eine Verkürzung der Flammenlänge. Bedingt durch die reduzierte Schichtdicke der Hochtemperaturzone wird bei höheren Roh-Vermiculitdurchsätzen die Verweilzeit reduziert, das bedeutet, die Roh-Vermiculitpartikel fallen ungebläht durch die Flamme. Gleichzeitig verlagert sich die Verbrennungszone in Richtung Brennerdüse, die Flamme beginnt zu pulsieren und der Ofen flammt aus. Neben einer erheblichen Durchsatzminderung steigt der Energieverbrauch überproportional.

Durch die Reduzierung der Sauerstoffgeschwindigkeit im Bereich zwischen 5 m/sec. bis 100 m/sec. gemäß der Erfindung wird in Abhängigkeit von der Geschwindigkeit die Primärflamme verlängert und die Temperatur in der Reaktionszone erhöht, ohne dass es zu einer Überschreitung der zulässigen Wandtemperatur kommt. Durch den verbesserten Wärmeübergang und die längere Verweilzeit kann der Durchsatz an Roh-Vermiculit um 50 % erhöht werden und der spezifische Energieverbrauch um 35 % reduziert werden.

Die höheren Temperaturen in der Primärflamme können auch für eine Reduzierung des Schüttgewichtes genutzt werden, da die Roh-Vermiculitpartikel weicher werden und durch das verdampfende Hydratwasser stärker aufblähen.

Nachfolgend wird die Erfindung anhand von Ausführungsbeispielen und einer Zeichnung näher erläutert. In der Zeichnung zeigen im einzelnen
- **Figur 1**: einen Ausschnitt der im Verfahren verwendeten Vorrichtung zur Herstellung von Vermiculitgranulat mit einem Brenner, der am unteren Ende eines Expansionsrohres angeordnet ist,
- **Figur 2**: einen Querschnitt des in Fig. 1 dargestellten Brenners,
- **Figur 3**: eine Abwandlung des in Fig. 1 dargestellten Brenners,
- **Figur 4**: einen Querschnitt des in Fig. 3 dargestellten Brenners und
- **Figur 5**: einen anderen Querschnitt des in Fig. 3 dargestellten Brenners.

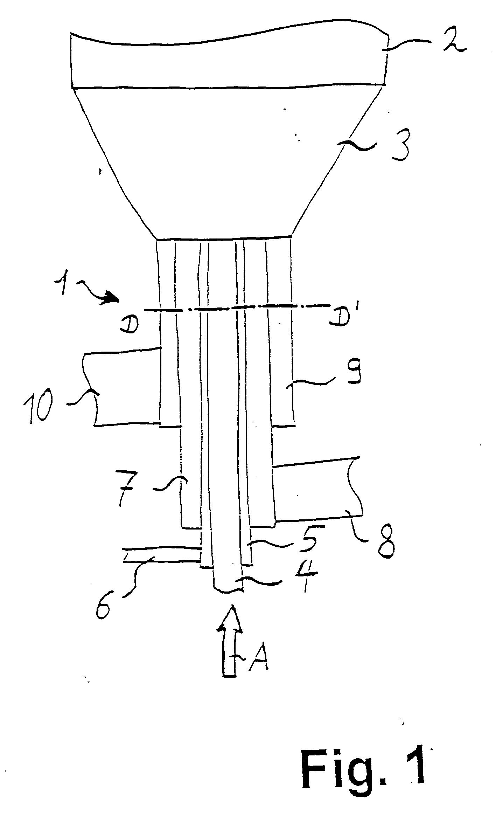

In Fig. 1 ist der untere Abschnitt aus einem Flugstromreaktor dargestellt. Der Brenner 1 ist am Expansionsrohr 2 an dessen unterem, konisch zulaufenden Ende 3 angeordnet. Über eine zentrisch angeordnete Brennstoff-Einzeldüse 4 wird dem Brenner der Brennstoff zugeführt. Sauerstoff wird durch eine konzentrisch um die Brennstoff-Einzeldüse 4 angeordnete Sauerstoff-Ringspaltdüse 5 über einen Anschlussstutzen 6 zugeführt. Konzentrisch um die Sauerstoff-Ringspaltdüse 5 ist eine Primärluftdüse 7 angeordnet, der über Anschlussstutzen 8 Luft zugeführt wird und welche konzentrisch von einer Sekundär-/Falschluft-Düse 9 mit Anschlussstutzen 10 umgeben ist. Die Zufuhr bzw. die Einblasrichtung der Stoffe ist hier durch Pfeil A dargestellt.

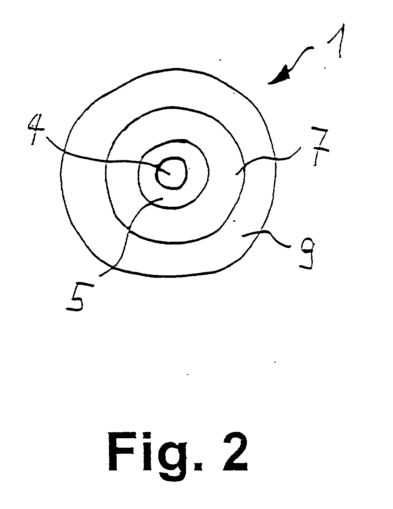

Fig. 2 zeigt einen Querschnitt des Brenners 1 in der Ebene der in Fig. 1 dargestellten Fläche D bis D'. Konzentrisch ineinander und um die Längsachse des Brenners 1 herum sind die Brennstoff-Einzeldüse 4, die Sauerstoff-Ringspaltdüse 5, die Primärluftdüse 7 und die Sekundär-/Falschluft-Düse 9 angeordnet. Die jeweiligen dazugehörigen Anschlussstutzen sind hier nicht dargestellt.

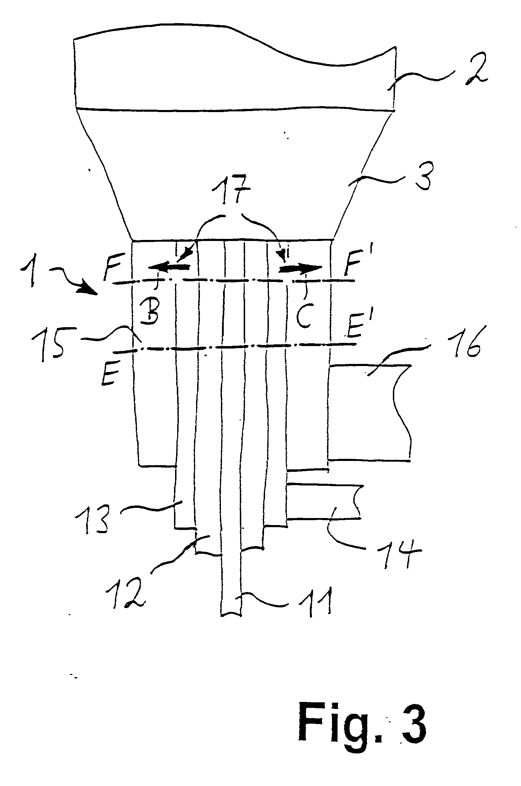

In Fig. 3 ist der untere Abschnitt aus einem Flugstromreaktor mit einer Abwandlung des Brenners 1 dargestellt. Der Brenner 1 ist am Expansionsrohr 2 an dessen unterem, konisch zulaufenden Ende 3 angeordnet. Über eine zentrisch angeordnete Sauerstoff-Einzeldüse 11 wird dem Brenner Sauerstoff zugeführt. Konzentrisch um die Sauerstoff-Einzeldüse 11 ist eine Sekundär/Falschluft-Düse 12 als Ringspaltdüse angeordnet. Brennstoff wird hier durch eine Brennstoff-Ringspalt-Düse 13 und über den Stutzen 14 zugeführt, wobei die Brennstoff-Ringspalt-Düse 13 konzentrisch um die Sekundär-/Falschluft-Düse 12 angeordnet ist. Konzentrisch um die Brennstoff-Ringspalt-Düse 13 ist eine Primärluftdüse 15 angeordnet, der über Anschlussstutzen 16 Luft zugeführt wird, wobei die Brennstoff- Ringspalt-Düse 13 Düsenöffnungen 17 aufweist, wodurch Brennstoff in die Primärluftdüse 15 gelangt (Pfeile A und B).

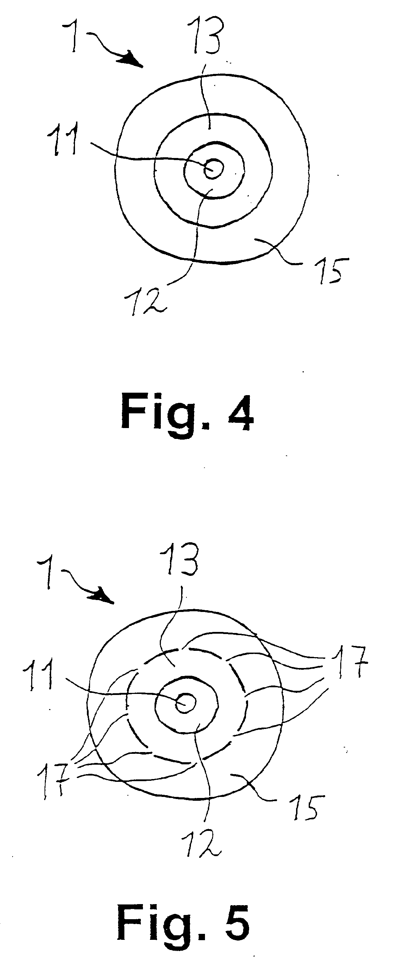

In Fig. 4 ist ein Querschnitt des Brenners 1 in der Ebene der Fläche E bis E' in Fig. 3 dargestellt. Konzentrisch ineinander und um die Längsachse des Brenners 1 herum sind die Sauerstoff-Einzeldüse 11, die Sekundär-/Falschluft- Ringspaltdüse 12, die Brennstoff-Ringspalt-Düse 13 und die Primärluft-Düse 15 angeordnet. Die jeweiligen dazugehörigen Anschlussstutzen sind hier nicht dargestellt.

Fig. 5 zeigt einen Querschnitt des Brenners 1 in der Ebene der in Fig. 3 dargestellten Fläche F bis F'. Konzentrisch ineinander und um die Längsachse des Brenners 1 herum sind die Sauerstoff-Einzeldüse 11, die Sekundär-/Falschluft- Ringspaltdüse 12, die Brennstoff-Ringspalt-Düse 13 und die Primärluft-Düse 15 angeordnet, wobei hier die Düsenöffnungen 17 der Brennstoff- Ringspalt-Düse 13 zu erkennen sind.

### Vergleichsbeispiel 1

Ein Flugstromreaktor mit einem Expansionsrohrdurchmesser von ca. 630 mm und einem konischen Boden dient zur Herstellung von geblähtem Vermiculit aus Roh-Vermiculit mit einer Körnung mit Korndurchmessern im bereich zwischen 0,25 mm und 8 mm.

Als Brennstoff werden 170 m³/h Erdgas mit einem unterstöchiometrischen Primärluftanteil (entsprechend λ = 0,35) durch einen außenmischenden Brenner, der am konischen Boden angeflanscht ist, verbrannt. Das Erdgas wird über mehrere Einzeldüsen transversal in den Primärluftstrom eingeblasen. Durch abgasseitige Saugzuggebläse werden zusätzlich Sekundär- und Falschluft durch die Sekundärluftdüse angesaugt.

Durch zwei Öffnungen im Expansionsrohr wird der Roh-Vermiculit durch eine Dosiervorrichtung in die Flamme zudosiert. Nach der Ofenoptimierung werden als Produkt im Zyklon und Filter der geblähte Vermiculit abgeschieden.

### Vergleichsbeispiel 2

An dem Flugstromreaktor gemäß Vergleichsbeispiel 1 wurde bei gleicher Körnung des Roh-Vermiculits die Primärluft mit Sauerstoff angereichert.

Die Primärluftmenge wurde reduziert und mit maximal 40 m³/h Sauerstoff auf 27,4 Vol.-% Sauerstoff angereichert. Nach der Ofenoptimierung werden als Produkt im Zyklon und Filter maximal 15 m³/h geblähtem Vermiculit mit einem Schüttgewicht von etwa 79 kg/m³ abgeschieden. Höhere Sauerstoffmengen waren nicht möglich, da der obere zulässige Grenzwert der Wandtemperatur überschritten wurde.Nach der Optimierung konnte eine Leistungssteigerung von 20% bei vergleichbarem Schüttgewicht des Vermiculits erreicht werden.

### Beispiel 1

Anstatt der Sauerstoffanreicherung der Primärluft wurde zentrisch in die vorhandene Primärluftdüse eine Sauerstoffdüse eingebaut. Bei einem Sauerstoffvolumenstrom von 50 m³/h, das bedeutet einer Düsenaustrittgeschwindigkeit von etwa 33 m/sec., wurde bei konstantem Erdgasdurchsatz die Primärluftmenge ebenfalls gedrosselt. Über die Sekundärluftdüse wurde Sekundär-/Falschluft angesaugt.

Durch die erfindungsgemäße Sauerstoffeinspeisung war eine Erhöhung der Vermiculitdurchsatzleistung von 50 % möglich. Der Erdgasverbrauch reduzierte sich dabei um 35 %.

## Patentansprüche

1. Verfahren zum Blähen von körnigem Roh-Vermiculit im Flugstrom einer Flamme unter Einleitung eines sauerstoffhaltigen Gases in diese Flamme, in einer Vorrichtung mit einem Expansionsrohr und einem oder mehreren an einem Ende des Expansionsrohres angeordneten Brenner, der mindestens eine Brenngasdüse für die Einleitung eines Brenngases und mindestens eine Primärluftdüse für Verbrennungsluft aufweist, wobei die Primärluftdüse die Brenngasdüse konzentrisch umgibt, oder wobei mehrere Brenngasdüsen innerhalb der mindestens einen Primärluftdüse angeordnet sind, **dadurch gekennzeichnet, dass** als sauerstoffhaltiges Gas Sauerstoff oder sauerstoffangereicherte Luft eingesetzt wird, wobei der Sauerstoff oder die sauerstoffangereicherte Luft durch mindestens eine Unterschalldüse axial in die Flamme eingeleitet werden.

2. Verfahren nach Anspruch 1, **dadurch gekennzeichnet, dass** die Austrittsgeschwindigkeit des Sauerstoffes oder der sauerstoffangereicherten Luft aus der Unterschalldüse 5 m/sec. bis 100 m/sec. beträgt.

3. Verfahren nach Anspruch 1 oder 2, **dadurch gekennzeichnet, dass** die sauerstoffangereicherte Luft mindestens 50 Vol% Sauerstoff enthält.

4. Verfahren nach einem der vorhergehenden Ansprüche, bei dem die Primärluftdüse die Unterschalldüse umgibt.

5. Verfahren nach einem der vorhergehenden Ansprüche, bei dem mindestens eine Sekundärluftdüse für Verbrennungsluft vorgesehen ist, die die Primärluftdüse koaxial umgibt.

6. Verfahren nach Anspruch 5, bei dem in der mindestens einen Sekundärluftdüse die mindestens eine Unterschalldüse angeordnet ist.

7. Verfahren nach einem der vorhergehenden Ansprüche, bei dem der Brenner einen Brennermund aufweist, in dem die Brenngasdüse und/oder die Primärluftdüse und die Unterschalldüse bündig abschließen.

## Claims

1. Process for expanding granular raw vermiculite in the entrained flow of a flame, with an oxygen-containing gas being introduced into this flame, in a device having an expansion tube and one or more burgers which is or are arranged at one end of the expansion tube and has or have at least one fuel gas nozzle for introducing a fuel gas and at least one primary air nozzle for combustion air, wherein the primacy air nozzle concentrically surrounds the fuel gas nozzle, or wherein a plurality of fuel gas nozzles are arranges within the at least one primacy air nozzle, **characterized in that** the oxygen-containing gas used is oxygen or oxygen-enriched air, wherein the oxygen or the oxygen-enriched air is introduced axially into the name by at least one infrasonic nozzle.

2. Process according to Claim 1, **characterized in that** the speed at which the oxygen or the oxygen-enriched air emerges from the infrasonic nozzle is 5 m/second to 100 m/second.

3. Process according to Claim 1 or 2, **characterized in that** the oxygen-enriched air contains at least 50% by volume of oxygen.

4. Process according to one of the preceding claims, in which the primacy air nozzle surrounds the infrasonic nozzle.

5. Process according to one of the preceding claims, in which at least one secondary air nozzle for combustion air is provides, and this nozzle coaxially surrounds the primary air nozzle.

6. Process according to Claim 5, in which the at least one infrasonic nozzle is arranges in the at least one secondary air nozzle.

7. Process according to one of the preceding claims, in which the burner has a burner mouth in which the fuel gas nozzle and/or the primary air nozzle and the infrasonic nozzle in a flush manner.

## Revendications

1. Procédé pour l'expansion de vermiculite brute granulaire dans le courant volant d'une flamme avec introduction d'un gaz contenant de l'oxygène dans cette flamme, dans un dispositif avec un tube d'expansion et un ou plusieurs brûleurs disposés à une extrémité du tube d'expansion, qui présente(nt) au moins une buse à gaz combustible pour l'introduction d'un gaz combustible et au moins une buse à air primaire pour l'air de combustion, dans lequel la buse à air frimaire entouré de façon concentrique la buse à gaz combustible, ou dans lequel plusieurs buses à gaz combustible sont disposées à l'intérieur de ladite au moins une buse à air primaire, **caractérisé en ce que** l'on utilise comme gaz contenant de l'oxygène de l'oxygène ou de l'air enrichi en oxygène, dans lequel on introduit l'oxygène ou l'air enrichi en oxygène axialement dans la flamme au moyen d'au moins une buse subsonique.

2. Procédé selon la revendication 1, **caractérisé en ce que** la vitesse de sortie de l'oxygène ou de l'air enrichi en oxygène hots de la buse subsonique est comprise entre 5 m/s et 100 m/s.

3. Procédé selon la revendication 1 ou 2, **caractérisé en ce que** l'agir enrichi en oxygène contient au moins 50 % en volume d'oxygène.

4. Procédé selon l'une quelconque des revendications précédentes, dans lequel la buse à air primaire entoure la buse subsonique.

5. Procédé selon l'une quelconque des revendications précédents, dans lequel il est prévu au moins une buse à air secondaire pour de l'air de combustion, qui entoure coaxialement la buse à air primaire.

6. Procédé selon la revendication 5, dans lequel ladite au moins, une buse subsonique est disposée dans ladite au moins une buse à air secondaire.

7. Procédé selon l'une quelconque des revendications précédentes, dans lequel le brûleur présente une embouchure de brûleur, dans lequel la buse se gaz combustible et/ou la buse à air primaire et la buse subsonique se terminent au même niveau.
